# EUROPEAN PATENT APPLICATION

(11) **EP 4 134 895 A1**
(43) Date of publication of application: **15.02.2023**
(21) Application number: 21783709.5
(22) Date of filing: 02.03.2021
(51) Int. Cl.: G06Q 30/02, G06Q 30/06

(54) **ICT-BASED INTER-COMPANY NETWORK MARKETING SYSTEM AND OPERATING METHOD THEREOF**

(30) Priority: 10.04.2020 KR 20200044047
(71) Applicant: Jeong, Sang Seop, Gyeonggi-do 16433 (KR)
(72) Inventor: Jeong, Sang Seop, Gyeonggi-do 16433 (KR)
(74) Representative: Hübner, Gerd
(86) International application number: PCT/KR2021/002568
(87) International publication number: WO 2021/206293

(57) **Abstract**

The present invention relates to an ICT-based inter-company network marketing system for performing B2B-based member attraction and sales, and an operating method thereof, the system comprising: a request reception unit for receiving a network marketing participation request from a terminal of a business sales member to participate in product promotion and sales; a trading relationship generation unit for, when a purchase request is received from a terminal of a business purchase member who wants to trade with a business sales member to participate in promotion and sales; and a network tree forming unit for forming a network tree by applying a trading relationship between a business sales member and a business purchase member, which is generated by the trading relationship generation unit. The present invention can provide an ICT-based inter-company network marketing system and an operating method thereof, wherein the ICT-based inter-company network marketing system can realize user recruitment and trading volume maximization through network marketing between company members.

## Description

### Field of Invention

The present invention relates to an internet-based network marking operating method and system, and more particularly, to an ICT-based inter-company network marketing system for performing B2B-based attraction and sales of members, and an operating method thereof.

### Background of Invention

Inter-company business (business to business: B2B) on the internet is generally performed by opening an internet site by a company that wishes to conduct business-to-business sales on the internet, and accessing the internet site by employees of another company that wishes to conduct business-to-business transactions with the above company.

However, the existing community has only functions of simply enabling information sharing between members who participate in the community with the same purpose while, in order to proceed its own transactions, even the existing B2B site should directly open a trading site.

On the other hand, there is a limit in that a commission for bid agency is excessively added to the transaction between companies.

The conventional network marketing methods include, for example, network marketing methods called pyramid, multi-level, diamond bank system, multi-level marketing, etc. A common point of these marketing methods is a system in that an individual recruits individuals and provides a predetermined point of profit from sales or income of posterior members to the up-line who firstly joined as members so as to recruit their down partners, that is, the posterior members as many as possible and increase the sales. A part of such network marketing includes selecting daily necessities as network marketing items to create sales and return the same to profit, or purchasing expensive products once then distributing the profits. As a result, during the above process, the posterior members often purchase products which are more expensive than the present price thereof and have no income, hence making a loss.

Further, even if the system does not cause any loss to every member by selecting daily necessities as network marketing items, it takes a lot of time and effort for each of the members to reach the desired level. Moreover, there is a problem that the number of people who can reach the desired level is generally less than 1% of total members even though spending a lot of time and effort.

This is because the conventional network marketing system is a system in which the purchase amount paid by a member becomes sales and is returned to profit. Specifically, a self-consumption member has a small amount of sales and thus receives no or very small and insignificant income. Further, the self-consumed sales of the above member are added up to the sales of first (or senior) members to generate revenue thereof. Therefore, the above system is advantageous for only the members who work very hard or joined first, instead, there is a problem that subordinated members have no choice but be satisfied with purchasing and using desired products.

Further, the existing GPO (Group Purchasing Organization) has low access to small wholesalers, pharmaceutical companies and medical instrument companies. On the other hand, there is a concern that fairness issues may arise due to the quota participation of specific companies and related parties in the GPO.

### Prior Art Literature

(Patent Document 1) KR 10-0533844 B1
(Patent Document 2) KR 10-2014-0091329 A

### Summary of Invention

### Technical Problem to be Solved

The present invention was derived from such a technical background as described above, and an object of the present invention is to provide an ICT-based inter-company network marketing system and an operating method thereof that can realize user recruitment and maximum transaction through network marketing between company members.

Further, it is intended to provide an independent and fair service platform characterized in that each company may not be governed and/or controlled by a specific company.

In addition, there is provided an ICT-based network marketing system that collects big data relevant to business-to-business transactions, quantitatively analyzes the collected data, and prepares and uses analysis reports in predicting transactions so as to contribute to the formation of a healthy commerce culture between sales companies and purchasing companies, as well as an operating method thereof.

### Technical Solution

In order to accomplish the above objects, the present invention may include the following configurations.

Specifically, the ICT-based inter-company network marketing system according to an embodiment of the present invention may include: a request reception unit to receive a network marketing participation request from a terminal of a business sales member who wishes to participate in product promotion and sales; a transaction relationship creating unit that, when a purchase request is received from a terminal of a business purchasing member who wishes to make a transaction with the business sales member who wishes to participate in product promotion and sales, creates a transaction relationship between the business sales member (who wishes to participate in product promotion and sales) and the business purchasing member; and a network tree forming unit that applies the transaction relationship created between the business sales member and the business purchasing member in the transaction relationship creating unit to form a network tree.

Meanwhile, the operating method of the ICT-based inter-company network marketing system may include: receiving a request to participate in network marketing sales from a terminal of a business sales member who wishes to participate in product promotion and sales by a request reception unit; when a purchase request is received from a terminal of a business purchasing member who wishes to make a transaction with the business sale member who wishes to participate in product promotion and sales, creating a transaction relationship between the business sales member (who wishes to participate in product promotion and sales) and the business purchasing member by a transaction relationship creating unit; and applying the transaction relationship created between the business sales member and the business purchasing member and thus forming a network tree by a network tree forming unit.

### Effect of Invention

According to the present invention, it is possible to provide an ICT-based inter-company network marketing system that can realize user recruitment and maximum transaction through network marketing between company members, as well as an operating method thereof.

Further, it is possible to provide an independent and fair service platform in that each company is not governed and controlled by a specific company.

In addition, it is possible to collect big data relevant to business-to-business transactions, quantitatively analyze the collected data, and prepare and use the analysis reports in predicting transaction, thereby contributing to the formation of healthy commerce culture between sales and purchasing companies.

### Brief Description of Drawings

FIG. 1 is a block diagram illustrating the configuration of an ICT-based inter-company network marketing system according to an embodiment of the present invention;
FIGS. 2 to 4 are exemplary diagrams for explaining a network tree formed in the network marketing system according to an embodiment and a profit structure thereby;
FIG. 5 is an exemplary diagram for explaining information provided by a transaction information providing unit according to an embodiment of the present invention; and
FIG. 6 is a flowchart illustrating an operating method of the ICT-based inter-company network marketing system according to an embodiment of the present invention.

### Detailed Description of Preferred Embodiments of Invention

It should be noted that the technical terms used in the present invention are only proposed to describe specific embodiments, and are not intended to limit the present invention. Further, the technical terms used in the present invention should be interpreted as meanings generally understood by those skilled in the art to which the present invention pertains unless otherwise defined specifically in the present invention, and it should not be construed in excessively comprehensive meanings or excessively reduced meanings.

Hereinafter, preferred embodiments of the present invention will be described in detail with reference to the accompanying drawings.

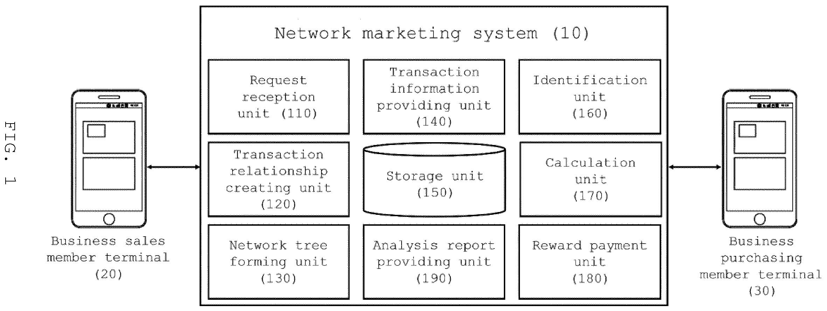

FIG. 1 is a block diagram illustrating the configuration of an ICT-based inter-company network marketing system according to an embodiment of the present invention.

The ICT-based inter-company network marketing system 10 according to an embodiment may include a service platform that can provide a purchasing agency service for companies engaged in various fields in a new operation manner.

In one embodiment, the network marketing system 10 may be applied to business-to-business transactions in the packaging material industry, business-to-business transactions in the food materials industry, business-to-business transactions in the beauty industry, and business-to-business transactions in the eyewear industry. However, the present invention is limited thereto.

As long as the network marketing system 10 has only basic financial solvency and ethics, anyone can enter the store to promote and sell products thereof. Further, it becomes possible to participate in independent and fair transactions that are not controlled by a specific company. Moreover, it is possible to provide a service platform that allows direct selection and purchase of a user group rather than acting as a proxy for bidding.

The network marketing system 10 according to an embodiment may be applied to business-to-business ("B2B") transactions in a specific field with a large volume of purchases and transactions. By introducing network marketing to B2B transactions, it may provide corporate-purchased product-related rewards and a service platform in which the rewards can be utilized in different ways. In particular, it may provide a profit structure that can create additional revenue for companies in various fields such as non-profit organization and medical fields.

Specifically, as shown in FIG. 1, the network marketing system 10 according to an embodiment may include a request reception unit 110, a transaction relationship creating unit 120, a network tree forming unit 130, a transaction information providing unit 140, a storage unit 150, an identification unit 160, a calculation unit 170, a reward payment unit 180 and an analysis report providing unit 190.

The request reception unit 110 may receive a network marketing participation request from a business sales member terminal 20 possessed by the business sales member in order to participate in product promotion and sales. In one embodiment, the business sales member may be construed to include companies that provide and sell supplies depending on the demand of other companies such as pharmaceutical companies, medical instrument sales companies, etc.

The request reception unit 110 may receive a product promotion and sales participation request through a dedicated application installed in the business sales member terminal 20.

In an additional aspect of the present invention, for example, the network marketing system 10 may further execute an approval procedure for the business sales member who is qualified through a self-inspection process. In the case of wholesalers, inquiry items to establish whether it is suitable for storage warehouse area standards according to permission criteria, whether warehouse consignment operation is possible, and to establish a management system for wholesalers, may be provided through the dedicated application.

Alternatively, the network marketing system 10 may receive uploading of various data confirming whether a business sales member has basic financial solvency and ethics, including: data that can verify whether it satisfies the KGSP standards supervised by a local government; data that can confirm the financial status; data relevant to payment details with the existing contract companies, etc., through a dedicated application installed in the business sales member terminal 20.

Further, based on the data uploaded through the dedicated application, it may be implemented to determine whether a company is suitable for product promotion and sales participation, and to permit participation when the company satisfies predetermined criteria. At this time, determining whether the company is suitable for product promotion and sales may be implemented by applying different criteria thereto.

If participating in the network marketing system 10 according to an embodiment of the present invention as a business sales member, it is characterized in that the member may be directly selected by a business purchasing member group without going through a bidding process, followed by making a transaction. In other words, if a predetermined criterion is satisfied without the intervention or domination of external forces or powers, a business sales member can be directly selected by a business purchasing member, whereby a new type of service platform capable of implementing direct transactions between companies (that is, business-to-business direct transaction) can be proposed.

Accordingly, the existing small wholesalers, pharmaceutical companies and medical instrument companies may overcome limitations of low access to demand companies such as medical institutions and excessive bid agency fees.

When the transaction relationship creating unit 120 receives a purchase request from a business purchasing member terminal 30 possessed by other business purchasing members who wish to make a transaction with a business sales member who wishes to participate in promotion and sales, the transaction relationship creating unit 120 may create a transaction relationship between the business sales member who wishes to participate in promotion and sales and the business purchasing member.

In this case, the creation of the transaction relationship may be interpreted to encompass a series of process of: presenting a contract that includes a predetermined unit price list; and concluding the contract through an agreement process between the business sales member and the business purchasing member.

The process of concluding the contract may include a process of creating an electronic contract between the business sales member and the business purchasing member and then receiving electronic signatures of both sides. At this time, the required documents such as a business registration certificate for the contract may be uploaded in the form of image. Further, the electronic contract may include information related to a quantity and schedule of delivered goods based on the transaction contract, and payment information.

Further, the network tree forming unit 130 may form a network tree by applying the transaction relationship created between the business sales member and the business purchasing member in the transaction relationship creating unit 120.

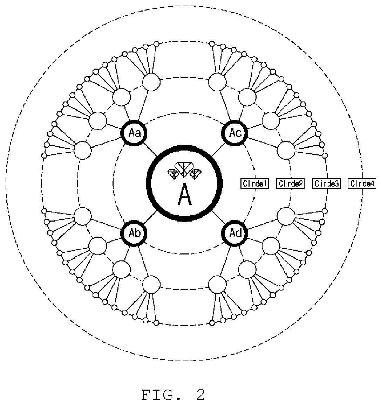

FIGS. 2 to 4 are exemplary diagrams for explaining a network tree formed in the network marketing system according to an embodiment and a profit structure thereby.

The network tree forming unit 130 may form a network tree based on member A, as shown in FIG. 2. In this case, members in direct transaction relationship with member A may include four members Aa, Ab, Ac and Ad. Further, other members except for Aa, Ab, Ac and Ad who are in direct transaction relationship may be members who are in indirect transaction relationship with member A.

The identification unit 160 may determine the number of members in a transaction relationship with the business purchasing member who wishes to make a transaction, as well as transaction volume, based on the network tree formed in the network tree forming unit 130.

Further, the calculation unit 170 may calculate a predicted payment point based on the transaction volume determined by the identification unit 160.

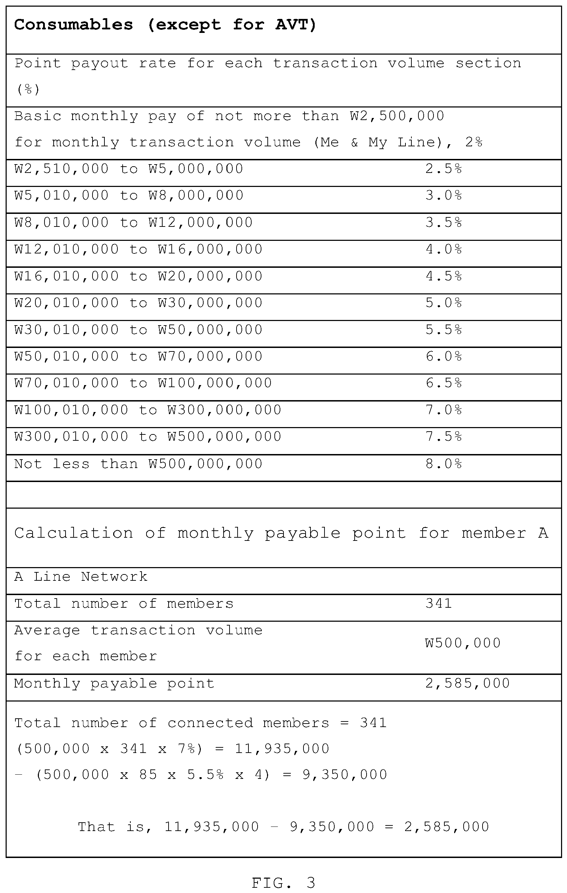

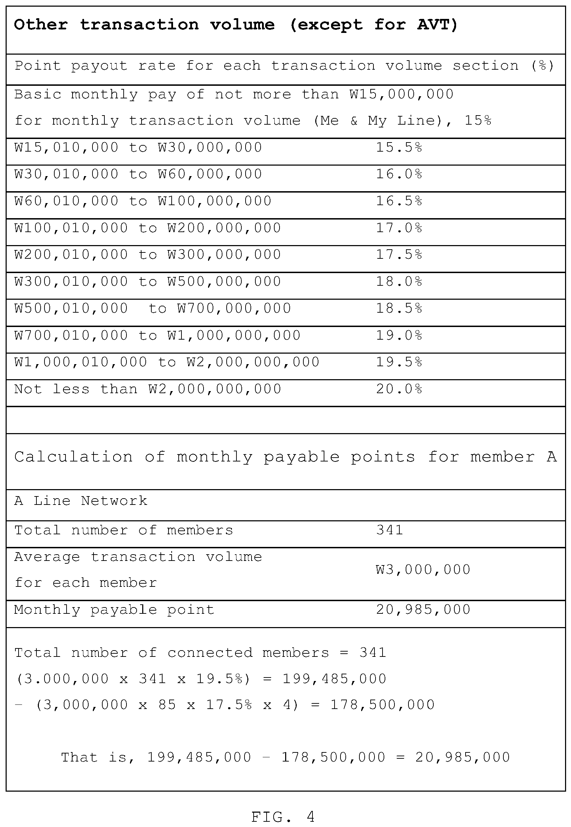

Specifically, as shown in FIGS. 3 and 4, the calculation unit 170 may calculate the predicted payment point by applying different point payout rates for each transaction volume section.

Referring to the calculation of points according to the transaction of consumable goods in FIG. 3, first, the calculation unit 170 may determine a total number of members connected to the network tree and the average transaction volume for each member with reference to member A.

Further, using the transaction volume of member A (Line) calculated by the number of members * average transaction volume, the point payout rate for the corresponding transaction volume section may be determined.

The calculation unit 170 may calculate total points by applying the entire tree based on member A, and then may receive points remaining by subtracting the points paid to members Aa, Ab, Ac and Ad who are in direct connection with member A.

In other words, in FIG. 3, member A would receive points (2,585,000) obtained by calculating total points (11,935,000) with reference to total 341 members connected to member A, and then, subtracting points (9,350,000) paid to members Aa, Ab, Ac and Ad. Therefore, it is possible to provide an opportunity for creation of infinite additional revenue through network marketing.

Further, the reward payment unit 180 may pay the predicted payment points calculated by the calculation unit 170 to the business purchasing member as the reward.

In this regard, the points paid by the reward payment unit 180 are characterized in that these may be used for at least one among product purchase cost settlement, leisure and tour services, vehicle purchase/lease, insurance/financial product services in the service platform provided by the network marketing system 10 according to an embodiment. However, the present invention is not limited thereto but it may be interpreted to encompass various types of reward forms.

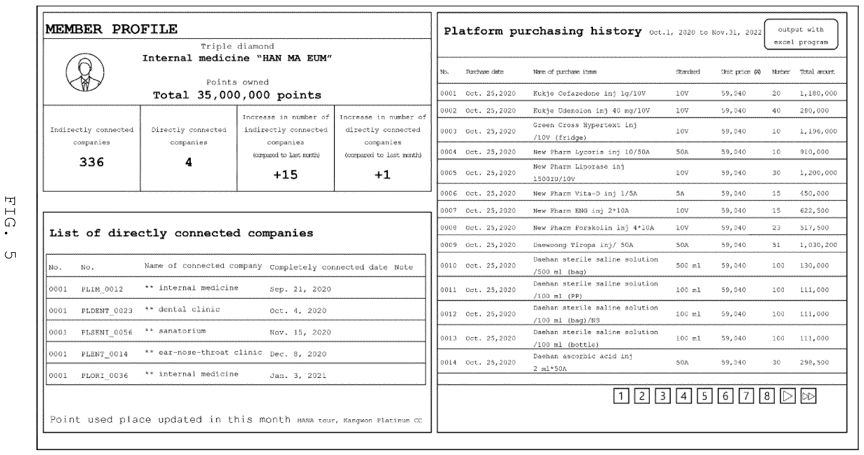

FIG. 5 is an exemplary diagram for explaining information provided by a transaction information providing unit according to an embodiment of the present invention.

In one aspect of the present invention, in response to a transaction information request from the business purchasing member terminal 30 to participate in promotion and sales, the transaction information providing unit 140 may provide information on the number of direct and indirect business relationships with the business sale members to participate in promotion and sales based on the network tree formed by the network tree forming unit 130.

According to an embodiment, the transaction information providing unit 140 may provide information as shown in FIG. 3 when accessing and logging in to a dedicated web page of a service platform provided by the network marketing system 10 or when executing a dedicated application.

Specifically, information on the rating given on the network tree of the corresponding business purchasing member, information on total points owned by the business purchasing member, the number of directly connected and indirectly connected companies, and information on increase in the number of directly connected and indirectly connected companies compared to the previous month may be provided.

Further, a list of directly connected companies and updated information on where to use points may also be provided. In addition, it may further provide purchase history information using the service platform provided by the network marketing system 10 according to an embodiment. Further, it is possible to provide information on the total purchase amount for a transaction subjected to point payment.

According to an additional aspect of the present invention, the analysis report providing unit 190 may collect big data of transaction details traded by business sales members to participate in product promotion and sales on a regional basis, quantitatively analyze the collected big data to prepare an analysis report, and provide the prepared analysis report to the business purchasing member terminal 30.

The storage unit 150 may store transaction history information in that a business sales member makes a transaction to participate in product promotion and sales. Further, the business purchasing member may store the purchase transaction history information using the network marketing system 10 according to an embodiment.

The analysis report providing unit 190 may extract and collect data on a regional basis among transaction details-related big data traded by the business sales members to participate in product promotion and sales, which are stored in the storage unit 150.

For example, by collecting big data traded in hospitals (including oriental clinics) for each department on the national and regional bases in the health care field and quantitatively analyzing the same, the analysis report may be created.

Further, the network marketing system 10 may provide the analysis report prepared by the analysis report providing unit to the business purchase terminal, thereby providing information that can be utilized by the business purchasing terminal can for transaction prediction. Accordingly, the business purchasing member may provide objective analysis information on the business sales members who wish to participate in promotion and sales before creating a transaction relationship, whereby the business purchasing member can decide whether to make a transaction relationship based on the analysis information.

That is, according to an embodiment, objective and accurate information based on the existing transaction details may be provided before the creation of the transaction relationship, thereby contributing to formation of healthy commercial transaction culture between the sales company and the purchasing company.

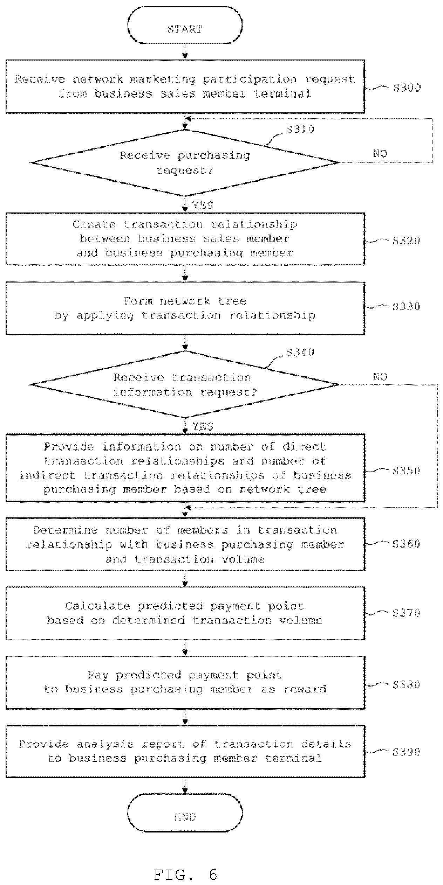

FIG. 6 is a flowchart of an operating method of an ICT-based inter-company network marketing system according to an embodiment of the present invention.

The request reception unit may receive a network marketing sales participation request from the terminal of the business sales member to participate in product promotion and sales (S300).

In one embodiment, the business sale member who wishes to participate in product promotion sand sales may be interpreted to include companies that provide and sell a supply quantity depending on the demand of other companies, such as pharmaceutical companies or medical instrument sales companies.

At this time, receiving the product promotion and sales participation request may be implemented through a dedicated application installed in the business sale member terminal.

In an additional aspect of the present invention, for example, the operating method of a network marketing system may further conduct an approval procedure for a business sales member who is qualified through self-inspection. In the case of wholesalers, inquiry items to establish whether it is suitable for storage warehouse area standards according to permission criteria and whether warehouse consignment operation is possible, and to establish a management system for wholesales, may be provided through a dedicated application.

Alternatively, the operating method of the network marketing system may receive uploading of various data confirming whether a business sales member has basic financial solvency and ethics, including: data that can verify whether it satisfies the KGSP standards supervised by a local government; data that can confirm the financial status; data relevant to payment details with the existing contract companies, etc., through a dedicated application installed in the business sales member terminal.

Further, based on the data uploaded through the dedicated application, it may be implemented to determine whether a company is suitable for product promotion and sales participation, and to permit participation when the company satisfies predetermined criteria.

If participating in the network marketing system according to an embodiment of the present invention as a business sales member, it is characterized in that the member may be directly selected by a business purchasing member group without going through a bidding process, followed by making a transaction. In other words, if a predetermined criterion is satisfied without the intervention or domination of external forces or powers, a business sales member can be directly selected by a business purchasing member, whereby a new type of service platform capable of implementing direct transactions between companies (that is, business-to-business direct transaction) can be proposed.

Accordingly, the existing small wholesalers, pharmaceutical companies and medical instrument companies may overcome limitations of low access to demand companies such as medical institutions and excessive bid agency fees.

When a transaction relationship creating unit receives a purchase request from a terminal of a business purchasing member who wishes to make a transaction with a business sales member who wishes to participate in promotion and sales (S310), the transaction relationship creating unit may create a transaction relationship between the business sales member who wishes to participate in promotion and sales and the business purchasing member (S320).

At this time, the creation of the transaction relationship may be interpreted to encompass a series of process of: presenting a contract that includes a predetermined unit price list; and concluding the contract through an agreement process between the business sales member and the business purchasing member.

The process of concluding the contract may include a process of creating an electronic contract between the business sales member and the business purchasing member and then receiving electronic signatures of both sides. At this time, the required documents such as a business registration certificate for the contract may be uploaded in the form of image. Further, the electronic contract may include information related to a quantity and schedule of delivered goods based on the transaction contract, and payment information.

Further, the network tree forming unit may form a network tree by applying the transaction relationship created between the business sales member and the business purchasing member in the transaction relationship creating unit 120 (S330).

The network tree forming unit may form a network tree based on member A, as shown in FIG. 2. In this case, members in direct transaction relationship with member A may include four members Aa, Ab, Ac and Ad. Further, other members except for Aa, Ab, Ac and Ad who are in direct transaction relationship may be members who are in indirect transaction relationship with member A.

Thereafter, according to the transaction information request from the business purchasing member who wishes to make a transaction (S340), the transaction information providing unit may provide information on the number of direct transactions and the number of indirect transactions with the terminal of the business purchasing member who wishes to make a transaction based on the network tree formed in the network tree forming unit (S350).

According to an embodiment, the transaction information providing unit may provide transaction information as shown in FIG. 5 when accessing and logging in to a dedicated web page of a service platform provided by the network marketing system or when executing a dedicated application.

Specifically, information on the rating given on the network tree of the corresponding business purchasing member, information on total points owned by the business purchasing member, the number of directly connected and indirectly connected companies, and information on increase in the number of directly connected and indirectly connected companies compared to the previous month may be provided.

Further, a list of directly connected companies and updated information on where to use points may also be provided. In addition, it may further provide purchase history information using the service platform provided by the network marketing system according to an embodiment. Further, it is possible to provide information on the total purchase amount for a transaction subjected to point payment.

According to one aspect of the present invention, the identification unit may detect the number of members in a transaction relationship with the business purchasing member, as well as transaction volume, based on the network tree formed in the network tree forming unit (S360).

Further, the calculation unit may calculate a predicted payment point based on the transaction volume determined by the identification unit (S370).

Specifically, as shown in FIGS. 3 and 4, the calculation unit may calculate the predicted payment point by applying different point payout rates for each transaction volume section.

Referring to the calculation of points according to the transaction of consumable goods in FIG. 3, first, the calculation unit may determine a total number of members connected to the network tree and the average transaction volume for each member with reference to member A.

Further, using the transaction volume of member A (Line) calculated by the number of members * average transaction volume, the point payout rate for the corresponding transaction volume section may be determined.

The calculation unit may calculate total points by applying the entire tree based on member A, and then may receive points remaining by subtracting the points paid to members Aa, Ab, Ac and Ad who are in direct connection with member A.

For example, in FIG. 3, member A would receive points (2,585,000) obtained by calculating total points (11,935,000) with reference to total 341 members connected to member A, and then, subtracting points (9,350,000) paid to members Aa, Ab, Ac and Ad. Therefore, it is possible to provide an opportunity for creation of infinite additional revenue through network marketing.

Further, the reward payment unit may pay the predicted payment points calculated by the calculation unit 170 to the business purchasing member as the reward (S380).

In this regard, the points paid by the reward payment unit 180 are characterized in that these may be used for at least one among product purchase cost settlement, leisure and tour services, vehicle purchase/lease, insurance/financial product services in the service platform provided by the network marketing system according to an embodiment. However, the present invention is not limited thereto but it may be interpreted to encompass various types of reward forms.

Following this, the analysis report providing unit may collect big data of transaction details traded by business sales members to participate in product promotion and sales on a regional basis, quantitatively analyze the collected big data to prepare an analysis report, and provide the prepared analysis report to the business purchasing member terminal (S390).

The operating method of the network marketing system may provide the analysis report prepared in the analysis report providing unit to the business purchasing terminal, thereby providing the information that can be utilized for transaction prediction by the business purchasing terminal. Accordingly, the business purchasing member may provide objective analysis information on the business sales members who wish to participate in promotion and sales before crating a transaction relationship, so that the business purchasing member can decide whether to create a transaction relationship based on the analysis information.

That is, according to an embodiment, by providing objective and accurate information based on the existing transaction details before the creation of the transaction relationship, it is possible to contribute to formation of healthy commercial transaction culture between the sales company and the purchasing company.

The above-described method may be implemented as an application or implemented in the form of program instructions that may be executed through various computer components and recorded in a computer-readable recording medium. The computer-readable recording medium may include program instructions, data files, data structures, etc., alone or in combination thereof.

The program instructions recorded on the computer-readable recording medium are specially designed and configured for the present invention, and may be known and available to those skilled in the computer software field.

Examples of the computer-readable recording medium may include a hard disk, a magnetic medium such as a floppy disk and a magnetic tape, an optical recording medium such as a CD-ROM and DVD, and a magneto-optical medium such as a floptical disk, and any hardware device specially configured to store and execute program instructions such as ROM, RAM, flash memory, and the like.

Examples of program instructions may include not only machine language codes such as those generated by a compiler, but also high-level language codes that can be executed by a computer using an interpreter or the like. The hardware device may be configured to operate as one or more software modules in order to perform processing according to the present invention, and vice versa.

Although the present invention has been described with reference to the embodiments, those skilled in the art will understand that various modifications and alterations are possibly made to the present invention without departing from the spirit and scope of the present invention, as set forth in the following claims.

### *Description of referential numerals*

10: Network marketing system 20: Business sales member terminal
30: Business purchasing member terminal 110: Request reception unit
120: Transaction relationship creating unit 130: Network tree forming unit
140: Transaction information providing unit 150: Storage unit
160: Identification unit 170: Calculation unit
180: Reward payment unit

## Claims

1. An ICT-based inter-company network marketing system, comprising:
a request reception unit to receive a network marketing participation request from a terminal of a business sales member who wishes to participate in product promotion and sales;
a transaction relationship creating unit that, when a purchase request is received from a terminal of a business purchasing member who wishes to make a transaction with the business sales member who wishes to participate in product promotion and sales, creates a transaction relationship between the business sales member who wishes to participate in product promotion and sales and the business purchasing member; and
a network tree forming unit that applies the transaction relationship created between the business sales member and the business purchasing member in the transaction relationship creating unit to form a network tree.

2. The system according to claim 1, further comprising: a transaction information providing unit that, in response to the transaction information request from the business purchasing member terminal to make a transaction, provides information on the number of direct and indirect business relationships with the business purchasing member based on the formed network tree.

3. The system according to claim 1, further comprising:
an identification unit that determines the number of members in a transaction relationship with the business purchasing member who wishes to make a transaction, as well as transaction volume, based on the formed network tree;
a calculation unit that calculates a predicted payment point based on the transaction volume determined by the identification unit; and
a reward payment unit that pays the predicted payment points calculated above to the business purchasing member as the reward.

4. The system according to claim 3, wherein the points paid by the reward payment unit are possibly used for at least one among product purchase cost settlement, leisure and tour services, vehicle purchase/lease, insurance/financial product services.

5. The system according to claim 3, further comprising:
an analysis report providing unit that collects big data of transaction details traded by business sales members to participate in product promotion and sales on a regional basis, quantitatively analyzes the collected big data to prepare an analysis report, and provides the prepared analysis report to the business purchasing member terminal.

6. An operating method of an ICT-based inter-company network marketing system, comprising:
receiving a request to participate in network marketing sales from a terminal of a business sales member who wishes to participate in product promotion and sales by a request reception unit;
when a purchase request is received from a terminal of a business purchasing member who wishes to make a transaction with the business sale member who wishes to participate in product promotion and sales, creating a transaction relationship between the business sales member who wishes to participate in product promotion and sales and the business purchasing member by a transaction relationship creating unit; and
applying the transaction relationship created between the business sales member and the business purchasing member and thus forming a network tree by a network tree forming unit.

7. The method according to claim 6, further comprising:
in response to a transaction information request from the terminal of the business purchasing member who wishes to make a transaction, providing information on the number of direct and indirect business relationships with the business purchasing member who wishes make a transaction based on the formed network tree, by the transaction information providing unit.

8. The method according to claim 6, further comprising:
determining the number of members in a transaction relationship with the business purchasing member, as well as transaction volume, based on the formed network tree, by an identification unit;
calculating a predicted payment point based on the determined transaction volume, by a calculation unit; and
paying the predicted payment points calculated above to the business purchasing member as the reward, by a reward payment unit.

9. The method according to claim 8, wherein the points paid to the business purchasing member are possibly used for at least one among product purchase cost settlement, leisure and tour services, vehicle purchase/lease, insurance/financial product services.

10. The method according to claim 8, further comprising:
collecting big data of transaction details traded by business sales members to participate in product promotion and sales on a regional basis, quantitatively analyzing the collected big data, and providing the prepared analysis report to the business purchasing member terminal, by an analysis report providing unit.
